Europäisches Patentamt

European Patent Office

Office européen des brevets

(19)

(11) **EP 0 818 691 B1**

(12) **FASCICULE DE BREVET EUROPEEN**

(45) Date de publication et mention
de la délivrance du brevet:
**16.04.2003 Bulletin 2003/16**

(51) Int Cl.⁷: **G01S 13/53**

(21) Numéro de dépôt: **97401603.2**

(22) Date de dépôt: **04.07.1997**

(54) **Procédé et dispositif de détection de cibles pour radar doppler à impulsions non ambigu à large bande**

Verfahren und Vorrichtung zur Zielerfassung für Doppler Radargeräte mit Hilfe von breitbandigen eindeutigen Pulsen

Method and apparatus for detecting targets for wide band non-ambiguous pulse doppler radar

(84) Etats contractants désignés:
**DE FR GB IT SE**

(30) Priorité: **09.07.1996 FR 9608509**

(43) Date de publication de la demande:
**14.01.1998 Bulletin 1998/03**

(73) Titulaire: **Thales**
**75008 Paris (FR)**

(72) Inventeur: **Le Chevalier, François**
**94117 Arcueil Cedex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(56) Documents cités:
**EP-A- 0 336 273        US-A- 5 115 246**

**Description**

La présente invention se rapporte à un procédé et à un dispositif de détection de cibles pour radar Doppler à impulsions non ambigu à large bande du type à basse fréquence de répétition et à haute résolution en distance.

Dans les radars de veille modernes en particulier, l'augmentation de portée les oblige à s'accommoder habituellement d'ambiguïtés en distance ou en vitesse. En distance, les ambiguïtés résultent de la méconnaissance du numéro de l'impulsion d'émission produisant un écho à un instant donné. L'ambiguïté en distance est donnée par $D_a$ = c Tr/2 où c est la vitesse de la lumière et Tr la période de répétition des impulsions. La distance d'une cible n'est donc connue qu'à un multiple de $D_a$ près. En vitesse, les ambiguïtés proviennent du principe même de mesure de l'effet Doppler, basé sur la mesure de l'évolution du déphasage entre l'oscillateur local et l'écho reçu, d'une impulsion à la suivante. Cette évolution du déphasage mesure le déplacement de la cible entre deux impulsions successives, évalué en longueurs d'onde : comme le déphasage n'est mesuré qu'à $2\pi$ près, la vitesse n'est mesurée qu'à $V_a = \lambda/$ (2 Tr) près, $V_a$ donnant l'ambiguïté en vitesse.

Ceci conduit à l'existence de vitesses aveugles, tous les $V_a$ à partir de la vitesse nulle. Pour un radar au sol, ceci conduit à éliminer toutes les cibles éventuelles évoluant au voisinage de ces vitesses ambiguës en même temps que le fouillis et vient donc limiter le domaine de couverture (en vitesse) du radar.

Pour un radar de portée suffisante, ces problèmes d'ambiguïtés deviennent suffisamment importants pour que l'on cherche à y remédier en émettant, dans chaque direction d'observation, plusieurs rafales d'impulsions de fréquences de récurrence (donc de vitesses aveugles) différentes. Malheureusement, ceci impose, pour maintenir une cadence de renouvellement suffisante, de réduire la durée de chaque rafale et donc de dégrader la résolution en vitesse. On peut en arriver à ce que chaque rafale ait si peu d'impulsions que le filtrage Doppler anti-fouillis élimine une proportion notable des cibles.

Pour atténuer ces inconvénients, on est conduit à concevoir des radars ambigus à la fois en distance et en vitesse: les radars à Moyenne Fréquence de Récurrence (MFR). Ces radars sont modérément ambigus en distance et en vitesse (quelques ambiguïtés) et on parvient à reconstituer les distance et vitesse réelles en émettant un petit nombre de rafales cohérentes dans chaque direction, au prix toutefois d'une certaine complexité due aux traitements de levée d'ambiguïté et d'une réduction généralement acceptable de la résolution en vitesse.

Dans le cas des radars aéroportés de pointe avant où les échos de fouillis reçus ont des vitesses radiales qui s'étalent entre -Vp et + Vp (Vp vitesse du porteur), les radars comportent plusieurs modes de fonctionnement, toujours en raison des problèmes d'ambiguïté : Haute Fréquence de Récurrence (HFR, non ambigu en vitesse) pour la détection des cibles en rapprochement ; Basse Fréquence de Récurrence (BFR, non ambigu en distance) pour la visée vers le haut ; Moyenne Fréquence de Récurrence (MFR, ambigu en distance et vitesse) pour la détection et la poursuite des cibles en éloignement. La levée d'ambiguïté est effectuée selon le principe multirafale décrit ci-dessus. En général, les résolutions en distance de ces radars sont de l'ordre d'une centaine de mètres en mode de veille.

Cependant, une telle résolution en distance est tout à fait insuffisante pour certaines applications telles que la cartographie à partir d'un radar aéroporté utilisant le procédé d'antenne synthétique ou l'analyse de la menace (analyse de raid, classification des cibles). Les hautes résolutions distance nécessaires vont de quelques mètres à quelques décimètres. Elles sont obtenues généralement par compression d'impulsion ou par bande synthétique (émission de rafales-cohérentes successives ou entrelacées à différentes fréquences porteuses).

Dans ces modes à haute résolution distance, on évite habituellement les problèmes d'ambiguïtés en se limitant à certaines conditions de fonctionnement. En cartographie, le radar utilisé est du type BFR et le domaine vitesse est limité au domaine non ambigu. En analyse de la menace, la cible est désignée à l'avance, généralement par un autre mode radar, et seul le domaine distance-vitesse correspondant à cette désignation est analysé.

Cependant, il est clair qu'un radar à haute résolution distance et, en même temps, non ambigu présenterait un très grand intérêt. Un des problèmes qui apparaissent immédiatement est celui de la migration en distance des cibles. En effet, en raison de la haute résolution en distance, donc de la faible largeur des cases distances, une cible mobile ne reste pas dans la même case distance entre la première récurrence et la dernière récurrence d'une durée d'analyse (rafale d'impulsions), ce qui ne permet pas d'appliquer une analyse Doppler classique case distance par case distance.

L'invention a pour but de remédier à ces inconvénients.

Elle a notamment pour objet un procédé de détection de cibles pour radar Doppler à impulsions non ambigu à large bande basé sur la compensation de la migration en distance avant l'analyse Doppler, pour chaque hypothèse de vitesse.

Selon l'invention, il est donc prévu un procédé de détection de cibles pour radar Doppler à impulsions non ambigu en distance à large bande du type à basse fréquence de répétition et à haute résolution en distance, dans lequel on émet une rafale de N impulsions cohérentes, la résolution distance $\delta R$, la période de récurrence des impulsions et la durée de la rafale étant telles qu'il se produit une migration, causée par le déplacement d'une cible mobile qui ne reste pas dans la même case distance entre la première et la dernière récurrence de la rafale, en distance supérieure à une case distance de largeur δR pour une cible ayant une vitesse égale à la vitesse ambiguë du radar, ledit procédé étant caractérisé en ce qu'il comprend les étapes de :

- rechercher, pour chaque porte en distance, les échantillons du signal reçu correspondant aux N récurrences de la rafale pour chaque hypothèse de vitesse réelle d'une cible ;
- effectuer l'analyse Doppler des échos reçus sur les N récurrences pour chaque porte en distance/hypothèse vitesse ; et
- extraire les informations sur chaque cible détectée à partir du rang de la porte en distance donnant la distance de la cible et du résultat de l'analyse Doppler et de l'hypothèse de vitesse correspondante donnant la vitesse non ambiguë de la cible.

Selon un autre aspect de l'invention, il est également prévu un dispositif de détection de cible pour radar Doppler à impulsions non ambigu en distance à large bande du type à basse fréquence de répétition et à haute résolution en distance, ledit radar comprenant un émetteur pour émettre une rafale de N impulsions cohérentes, la résolution distance δR, la période de répétition des impulsions et la durée de la rafale étant telles qu'il se produit une migration en distance, causée par le déplacement d'une cible mobile qui ne reste pas dans la même case distance entre la première et la dernière récurrence de la rafale, supérieure à une case distance de largeur δR pour une cible ayant une vitesse égale à la vitesse ambiguë du radar, et des moyens de réception pour fournir des échantillons de signal reçu lors de chacune des récurrences de la rafale, ledit dispositif mettant en oeuvre le procédé exposé ci-dessus et étant caractérisé en ce qu'il comprend :

- des moyens de recherche, pour chaque porte en distance, des échantillons du signal reçu correspondant aux N récurrences de la rafale pour chaque hypothèse de vitesse réelle d'une cible ;
- des moyens de calcul de la transformée de Fourier desdits échantillons sélectionnés par lesdits moyens de recherche ;
- des moyens de comparaison des résultats de ladite transformée de Fourier à un seuil prédéterminé pour détecter la présence d'une cible ; et
- des moyens d'extraction pour fournir les informations de distance et de vitesse réelle non ambiguë de chaque cible détectée.

L'invention sera mieux comprise et d'autres caractéristiques et avantages apparaîtront à l'aide de la description ci-après et des dessins joints où :

- la figure 1 est un diagramme explicitant le principe du procédé selon l'invention ;
- la figure 2 est un diagramme de la fonction d'ambiguïté lorsqu'il n'y a pas migration en distance ;
- la figure 3 représente la fonction d'ambiguïté dans le cas du procédé selon l'invention ;
- la figure 4 représente une partie agrandie du diagramme de la figure 3 ; et
- la figure 5 est un schéma de principe d'un mode de réalisation du dispositif mettant en oeuvre le procédé selon l'invention.

Comme on l'a déjà mentionné, le procédé selon l'invention s'applique à un radar Doppler à impulsions du type à basse fréquence de répétition (BFR, non ambigu en distance) et à haute résolution en distance, donc à large bande. Dans un tel cas, il se produit un phénomène de migration en distance qui peut être sensible sur la durée de la rafale cohérente émise. Si $\underline{v}$ représente la vitesse radiale réelle d'une cible, N le nombre d'impulsions de la rafale et Tr la période de répétition des impulsions, on a migration si

$$Nv\,Tr > \delta R$$

où δR est la résolution distance (et la largeur d'une case distance du radar).

Le traitement de veille consiste pour chaque hypothèse distance/vitesse envisageable, c'est-à-dire pour chaque hypothèse de retard du signal reçu par rapport à l'impulsion émise, de migration distance d'impulsion à impulsion et de déphasage des échos reçus d'impulsion à impulsion, à compenser cette migration avant d'effectuer l'analyse Doppler. Pour chaque hypothèse de vitesse, on recueille les échos reçus de chaque impulsion émise, en tenant compte de la migration en distance, et on les somme après les avoir remis en phase, ce qui peut se faire par exemple à l'aide d'une transformée de Fourier ou par corrélation avec une réplique du signal attendu.

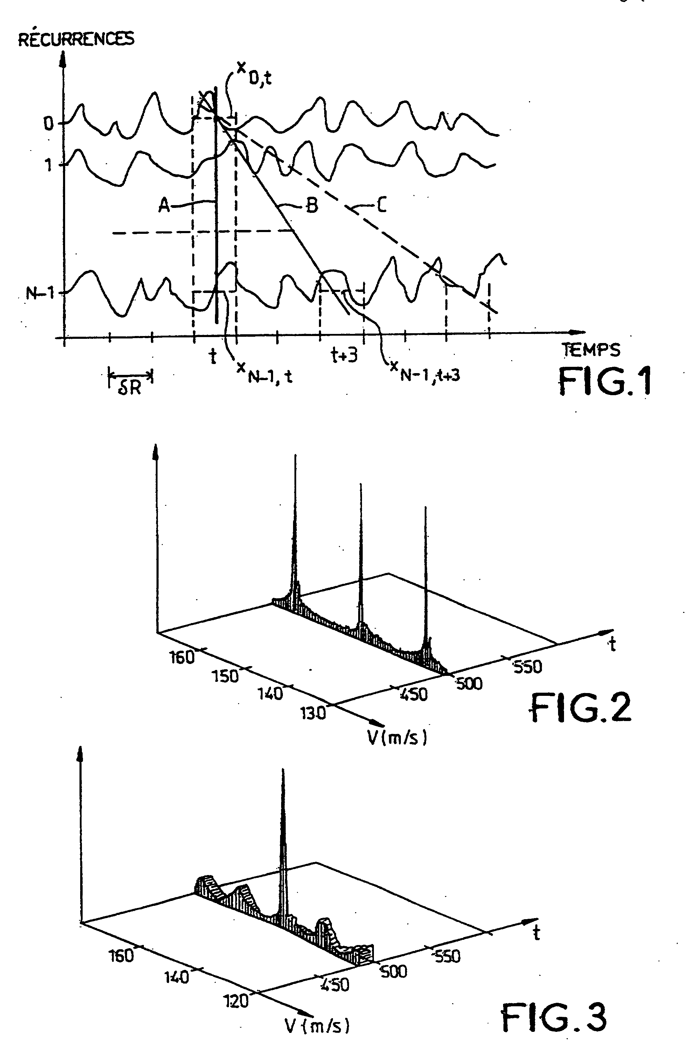

La figure 1 est un diagramme explicitant ce traitement. Le signal en fonction du temps pour chaque récurrence 0 à N-1 est représenté et on considère le cas du traitement de la case ou porte en distance $\underline{t}$ (relative à la récurrence 0).

Pour une cible à vitesse lente (pas de migration en distance) on effectue l'analyse Doppler avec les échantillons $x_{0,t}$ à $x_{N-1,t}$ disposés le long de la droite A. Pour une hypothèse de cible plus rapide dont le déplacement est symbolisé par la droite B, une migration en distance de trois cases est constatée et l'analyse Doppler s'effectuera avec les échantillons rencontrés le long de B depuis $x_{0,t}$ jusqu'à $x_{N-1, t+3}$. De même pour la droite C correspondant à une hypothèse de vitesse plus élevée. On a considéré ici des hypothèses de cible en éloignement.

Naturellement on effectue les mêmes opérations pour des hypothèses de cibles en rapprochement, les droites étant alors inclinées dans l'autre sens (vers des cases plus proches pour les dernières récurrences).

Pour illustrer les différences essentielles entre un traitement classique et le traitement selon l'invention, on a représenté sur la figure 2 la fonction d'ambiguïté d'un radar BFR à faible bande de fréquence (migration distance négligeable) et sur la figure 3 la fonction d'ambiguïté avec un traitement selon l'invention tel que décrit ci-dessus pour un radar BFR à haute résolution distance (large bande).

On a supposé un radar utilisant une longueur d'onde de 3 cm, une rafale de 30 impulsions et une période de répétition de 1 ms pour une cible ayant une vitesse V de 150 m/s {multiple de la vitesse ambiguë). Dans le cas de la figure 2, avec une durée d'impulsion de 1 µs, on constate la présence de pics réguliers en vitesse traduisant les ambiguïtés en vitesse d'un radar BFR classique à faible bande.

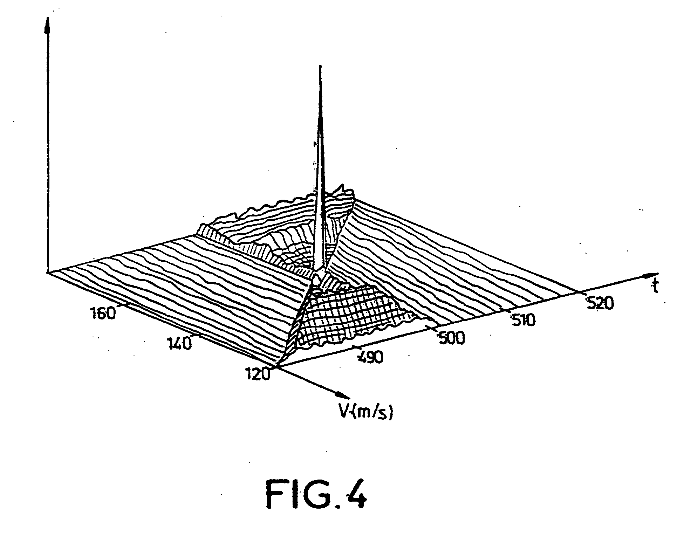

Par contre, dans le cas de la figure 3, avec une durée d'impulsion de 1 ns, ces pics sont atténués, sauf le pic central. Par ailleurs on observe une remontée de lobes secondaires entre ces pics avec un étalement triangulaire que l'on voit mieux sur la figure 4 qui est un diagramme agrandi sauf selon l'axe des vitesses. Pour une hypothèse de distance $D_{o+d}$ légèrement supérieure à la distance $D_o$ de la cible et une hypothèse de vitesse $V_o + v$ légèrement supérieure à la vitesse $V_o$, il est clair (d'après la figure 1) que les droites selon lesquelles se font la sommation en phase des signaux reçus comportent une partie commune où les signaux reçus pour les deux hypothèses proviennent des mêmes cases distance. Ainsi la cible $D_o$, $V_o$ contribue un peu à la sortie du traitement en $D_{o+d}$, $V_o + v$, d'où les lobes secondaires observés.

Compte ténu de ces remarques, on va maintenant préciser les caractéristiques du procédé selon l'invention. La forme d'onde utilisée possède les propriétés suivantes :

- elle est à basse fréquence de récurrence de façon à assurer qu'il n'existe pas d'ambiguïté distance ;
- elle est à haute résolution distance, typiquement inférieure au mètre, donc à large bande de fréquence ;
- la période de récurrence Tr, le nombre N d'impulsions par rafale cohérente et la résolution distance δR sont définis de manière que la migration en distance, pour une cible à la vitesse ambiguë $V_a = \lambda/(2\ Tr)$ soit sensible sur la durée NTr de la rafale, c'est-à-dire supérieure à une case distance.

A titre d'exemple, pour un radar en bande X ($\lambda$ = 3 cm) avec une période de récurrence de 1 ms conduisant à une vitesse ambiguë de 15 m/s, il est possible d'adopter, pour une rafale de 50 impulsions, une résolution distance de 15 cm (soit une largeur de bande de 1 GHz), conduisant à une migration de 5 cases distance sur la durée de la rafale pour une cible se déplaçant à 15 m/s.

Le procédé selon l'invention consiste à combiner cette forme d'onde avec un traitement explorant toutes les hypothèses vitesse au-delà de la vitesse ambiguë selon le principe expliqué en liaison avec la figure 1. Plus précisément, on choisit donc des valeurs de vitesse "grossière" V espacées d'un pas $\Delta$V tel que l'incrémentation de la migration distance soit au maximum de une case distance entre la première et la dernière récurrence, soit N$\Delta$V Tr$\leq$δR.

Pour des raisons de bilan de liaison, il est dans la plupart des cas nécessaire de recourir à la compression d'impulsion pour avoir une largeur de bande de 1 GHz. On peut par exemple comprimer à 1 ns des impulsions de 1 µs.

La forme d'onde utilisée est particulièrement avantageuse pour sa résistance au brouillage et sa discrétion en raison de la grande largeur de bande utilisée.

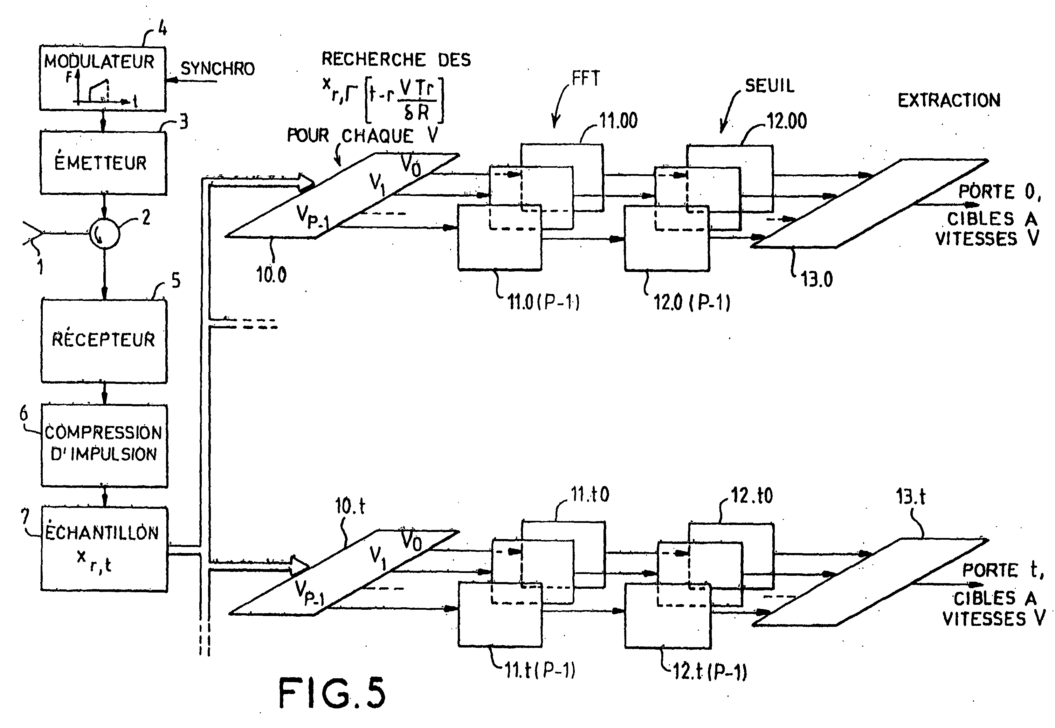

La mise en oeuvre du procédé selon l'invention peut se faire par exemple à l'aide d'un dispositif suivant le mode de réalisation de la figure 5.

Sur cette figure 5, on a représenté de manière très schématique la partie émission et la partie initiale de la voie de réception.

Un émetteur 3 modulé par un modulateur 4 selon la forme d'onde mentionnée, c'est-à-dire fournissant par exemple des impulsions modulées en fréquence, transmet l'onde à émettre à une antenne 1 par l'intermédiaire d'un circulateur 2.

Les signaux reçus par l'antenne 1 sont envoyés par le circulateur 2 à un récepteur 5 classique suivi d'un dispositif dé compression d'impulsion 6. Les signaux sont ensuite échantillonnés et numérisés par un circuit 7 qui délivre les échantillons $x_{r,t}$ où r numéro de la récurrence varie entre 0 et N-1 et t est le rang de la case ou porte en distance correspondant à l'échantillon.

Le dispositif de détection de cible selon l'invention comprend autant de voies de traitement identiques que de portes en distance à analyser. Deux de ces voies, correspondant aux portes en distance de rang 0 et t, ont été représentées. Chaque voie comporte d'abord un dispositif, 10.0...10.t..., de recherche, parmi tous les échantillons fournis par le circuit 7, des échantillons correspondant à la porte en distance considérée pour chaque hypothèse de vitesse grossière. Ainsi sur la sortie correspondant à la vitesse supposée de la cible, le dispositif de recherche fournit pour la porte en distance $\underline{t}$, les échantillons :

$$x_{r,\Gamma}\left[t-r\frac{VTr}{\delta R}\right]$$

où $\Gamma[\;]$ désigne l'entier le plus proche de la quantité entre crochets. On prend V négative pour une cible en éloignement. Pour chaque vitesse V, les échantillons, compensés quant à la migration en distance, sont envoyés à un circuit de transformée de Fourier 11.00 à 11.0 (P-1), ...; 12.t0 à 12.t (P-1) suivi d'un circuit de seuil 12.00 à 12.0 (P-1), ..., 12. t0 à 12.t(P-1).

Le circuit de transformée de Fourier, par exemple de calcul de transformée de Fourier rapide FFT, pour la distance t$\delta$R et l'hypothèse de vitesse V calcule le niveau de signal selon la relation

$$T_{t\delta R,V}=\sum_{r=0}^{N-1}x_{r,\Gamma}\left[t-r\frac{VTr}{\delta R}\right]\cdot e^{-j2\pi\frac{Fo}{Fr}\frac{2V}{c}}$$

En prenant N valeurs différentes de V réparties dans un domaine de largeur $\pm\frac{\lambda_o Fr}{4}$ autour de V, valeur grossière de la vitesse, on peut calculer par transformée de Fourier N valeurs de signal permettant d'obtenir la valeur fine de la vitesse pour chaque circuit de transformée de Fourier.

Un circuit d'extraction 13.0, ..., 13.t, ... permet, à partir de l'information de vitesse grossière et de vitesse fine fournies par la sortie du circuit de transformée de Fourier dont le niveau a dépassé le seuil prédéterminé, de délivrer les informations de présence de cible à la distance t$\delta$R et à la vitesse fine non ambiguë $V_f$ déduite de la vitesse grossière V et de l'information fine donnée par le circuit de FFT correspondant.

La réalisation du dispositif de détection de cible selon l'invention ne nécessite aucun élément nouveau du côté de l'émission. En effet, on connaît des émetteurs et des antennes fonctionnant en bande X avec une bande relative de 10 % et capable de moduler les impulsions émises pour faire de la compression d'impulsions.

Les voies de réception doivent être adaptées à la largeur de bande, notamment en ce qui concerne la conversion analogique/numérique large bande.

Du point de vue du traitement, les capacités requises sont importantes puisque la bande passante est environ 1000 fois supérieure à celle des radars classiques. Aussi, il est possible d'envisager de n'implanter ce mode de fonctionnement BFR large bande que pour une partie seulement des portes en distance.

On peut noter que la condition posée pour la migration en distance pour la vitesse ambiguë se traduit par N $V_a$ Tr = N$\lambda$/2 > k $\delta$R avec k $\geq$1 et que la valeur de k fixe le niveau des lobes secondaires de la fonction d'ambiguïté (on peut par exemple prendre k égal à 4 ou 5).

Bien entendu, l'exemple de réalisation décrit n'est nullement limitatif de l'invention.

**Revendications**

1. Procédé de détection de cibles pour radar Doppler à impulsions non ambigu en distance à large bande du type à basse fréquence de répétition et à haute résolution en distance, dans lequel on émet une rafale de N impulsions cohérentes, la résolution distance $\delta$R, la période de récurrence des impulsions et la durée de la rafale étant telles qu'il se produit une migration en distance, causée par le déplacement d'une cible mobile qui ne reste pas dans la même case distance entre la première et la dernière récurrence de la rafale, supérieure à une case distance de largeur $\delta$R pour une cible ayant une vitesse égale à la vitesse ambiguë du radar, ledit procédé étant **caractérisé en ce qu'**il comprend les étapes de :

   - rechercher, pour chaque porte en distance, les échantillons du signal reçu correspondant aux N récurrences de la rafale pour chaque hypothèse ($V_o$ à $V_{N-1}$) de vitesse réelle d'une cible, ladite étape déterminant pour chaque porte en distance/hypothèse vitesse, dans chaque récurrence l'échantillon correspondant à la compensation de la migration en distance due à ladite vitesse ;

- effectuer l'analyse Doppler des échos reçus sur les N récurrences pour chaque porte en distance/hypothèse vitesse ; et

- extraire les informations sur chaque cible détectée à partir du rang de la porte en distance donnant la distance de la cible et du résultat de l'analyse Doppler et de l'hypothèse de vitesse correspondante donnant la vitesse non ambiguë de la cible.

2. Procédé selon la revendication 1, **caractérisé en ce que**, dans ladite étape de rechercher les échantillons du signal reçu, les hypothèses de vitesse correspondent à des valeurs grossières successives de la vitesse de la cible espacées l'une de l'autre d'une valeur incrémentale ΔV telle que cette valeur ΔV n'induise pas une migration en distance supérieure à une case en distance entre la première et la dernière récurrence de la rafale.

3. Procédé selon l'une quelconque des revendications précédentes, **caractérisé en ce que**, pour chaque récurrence r, l'échantillon sélectionné pour une porte en distance t et une vitesse V est l'échantillon de rang égal à la partie entière de $t-r\frac{VTr}{\delta R}$, où Tr est la période de répétition.

4. Procédé selon la revendication 3, **caractérisé en ce que** la valeur incrémentale ΔV est choisie telle que:

$$\Delta V \le \frac{\delta R}{NTr}$$

avec δR = c/2B où c est la vitesse de la lumière et B est la bande de fréquences du radar.

5. Procédé selon l'une quelconque des revendications précédentes, **caractérisé en ce que** ladite étape d'effectuer l'analyse Doppler des échos reçus consiste à sommer les échantillons sélectionnés pour chaque porte en distance/hypothèse vitesse après les avoir remis en phase et à comparer les sommes obtenues à un seuil déterminant l'existence ou non d'une cible.

6. Procédé selon la revendication 5, **caractérisé en ce que** ladite analyse Doppler comprend le calcul de la transformée de Fourier des échantillons sélectionnés selon la relation :

$$T_{t\delta R,V} = \sum_{r=0} x_{r,\Gamma}\left[t-r\frac{VTr}{\delta R}\right]e^{-j2\pi r\frac{Fo}{Fr}\frac{2V}{c}}$$

où $T_{t\delta R,V}$ représente le niveau de signal obtenu par l'analyse Doppler pour la distance tδR et la vitesse grossière *V*,

$$\Gamma\left[t-r\frac{VT_r}{\delta R}\right]$$

représente l'entier le plus proche de $t-r\frac{VTr}{\delta R}$, Fo la fréquence d'émission.

7. Dispositif de détection de cible pour radar Doppler à impulsions non ambigu en distance à large bande du type à basse fréquence de répétition et à haute résolution en distance, ledit radar comprenant un émetteur (1 à 4) pour émettre une rafale de N impulsions cohérentes, la résolution distance δ R, la période de répétition des impulsions et la durée de la rafale étant telles qu'il se produit une migration en distance, causée par le déplacement d'une cible mobile qui ne reste pas dans la même case distance entre la première et la dernière récurrence de la rafale, supérieure à une case distance de largeur δR pour une cible ayant une vitesse égale à la vitesse ambiguë du radar, et des moyens de réception (1, 2, 5, 6, 7) pour fournir des échantillons de signal reçu lors de chacune des récurrences de la rafale, ledit dispositif mettant en oeuvre le procédé selon l'une quelconque des revendications 1 à 6 et étant **caractérisé en ce qu'**il comprend :

- des moyens de recherche (10.0, 10.t...), pour chaque porte en distance, des échantillons du signal reçu correspondant aux N récurrences de la rafale pour chaque hypothèse ($V_o$ à $V_{N-1}$) de vitesse réelle d'une cible, ladite recherche déterminant pour chaque porte en distance/hypothèse vitesse, dans chaque récurrence l'échantillon correspondant à la compensation de la migration en distance due à ladite vitesse ;

- des moyens de calcul (11.00 à 11.0(N-1); 11.t.0 à 11.t (N-1)...) de la transformée de Fourier desdits échantillons sélectionnés par lesdits moyens de recherche ;
- des moyens de comparaison (12.00 à 12.0 (N-1) ; 12.t0 à 12.t (N-1)...) des résultats de ladite transformée de Fourier à un seuil prédéterminé pour détecter la présence d'une cible ; et
- des moyens d'extraction (13.0, 13.t...) pour fournir les informations de distance et de vitesse réelle non ambiguë de chaque cible détectée.

**Claims**

1.  Method of detecting targets for wideband distance-unambiguous pulse Doppler radar of the type having low repetition frequency and high distance resolution, in which a burst of N coherent pulses is transmitted, the distance resolution δR, the period of recurrence of the pulses and the duration of the burst being such that a distance migration occurs, caused by the displacement of a moving target which does not remain in the same distance bin between the first and the last recurrence of the burst, greater than a distance bin of width δR for a target having a velocity equal to the ambiguous velocity of the radar, the said method being **characterized in that** it comprises the steps of:

    - for each distance gate, searching for the samples of the signal received corresponding to the N recurrences of the burst for each hypothesis ($V_O$ to $V_{N-1}$) regarding the actual velocity of a target, the said step determining for each distance gate/velocity hypothesis, in each recurrence the sample corresponding to the compensation for the distance migration due to the said velocity;
    - performing the Doppler analysis of the echoes received over the N recurrences for each distance gate/velocity hypothesis; and
    - extracting the information regarding each target detected on the basis of the rank of the distance gate giving the distance of the target and of the result of the Doppler analysis and of the corresponding velocity hypothesis giving the unambiguous velocity of the target.

2.  Method according to Claim 1, **characterized in that**, in the said step of searching for the samples of the signal received, the velocity hypotheses correspond to successive rough values of the velocity of the target, spaced apart by an incremental value ΔV such that this value ΔV does not induce any distance migration greater than a distance bin between the first and the last recurrence of the burst.

3.  Method according to any one of the preceding claims, **characterized in that**, for each recurrence r, the sample selected for a distance gate t and a velocity V is the sample of rank equal to the integer part of $t - r\frac{VTr}{\delta R}$, where Tr is the repetition period.

4.  Method according to Claim 3, **characterized in that** the incremental value ΔV is chosen such that:

$$\Delta V \leq \frac{\delta R}{NTr}$$

with δR = c/2B where c is the velocity of light and B is the frequency band of the radar.

5.  Method according to any one of the preceding claims, **characterized in that** the said step of performing the Doppler analysis of the echoes received consists in summing the samples selected for each distance gate/velocity hypothesis after having put them back into phase and in comparing the sums obtained with a threshold determining the existence or otherwise of a target.

6.  Method according to Claim 5, **characterized in that** the said Doppler analysis comprises the calculation of the Fourier transform of the samples selected according to the relation:

$$T_{t\delta R,V} = \sum_{r=0} x_{r,\Gamma\left[t-r\frac{VTr}{\delta R}\right]} e^{-j2\Pi r\frac{Fo2V}{Fr\,c}}$$

where $T_{t\delta R,V}$ represents the signal level obtained by the Doppler analysis for the distance t$\delta$R and the rough velocity V,

$$\Gamma\left[t - r\frac{VT_r}{\delta R}\right]$$

represents the integer closest to $t - r\frac{VTr}{\delta R}$, $F_o$ the transmission frequency.

**7.** Device for detecting targets for wideband distance-unambiguous pulse Doppler radar of the type having low repetition frequency and high distance resolution, the said radar comprising a transmitter (1 to 4) for transmitting a burst of N coherent pulses, the distance resolution $\delta$R, the period of repetition of the pulses and the duration of the burst being such that a distance migration occurs, caused by the displacement of a moving target which does not remain in the same distance bin between the first and last recurrence of the burst, greater than a distance bin of width $\delta$R for a target having a velocity equal to the ambiguous velocity of the radar and means of reception (1, 2, 5, 6, 7) for supplying samples of the signal received during each of the recurrences of the burst, the said device implementing the method according to any one of Claims 1 to 7, and being **characterized in that** it comprises:

- means (10.0, 10.t...) of searching, for each distance gate, for the samples of the signal received corresponding to the N recurrences of the burst for each hypothesis ($V_O$ to $V_{N-1}$) regarding the actual velocity of a target, the said search determining for each distance gate/velocity hypothesis, in each recurrence the sample corresponding to the compensation for the distance migration due to the said velocity;
- means of calculation (11.00 to 11.0(N-1); 11.t.0 to 11.t(N-1)...) of the Fourier transform of the said samples selected by the said searching means;
- means of comparison (12.00 to 12.0 (N-1); 12.t0 to 12.t (N-1)...) of the results of the said Fourier transform with a predetermined threshold so as to detect the presence of a target; and
- means of extraction (13.0, 13.t...) for supplying the information regarding distance and unambiguous actual velocity of each target detected.

**Patentansprüche**

**1.** Verfahren zur Erfassung von Zielen für ein breitbandiges und hinsichtlich der Entfernung nicht mehrdeutiges Impuls-Dopplerradarsystem mit niedriger Wiederholfrequenz und hoher Entfernungsauflösung, wobei eine Gruppe von N kohärenten Impulsen ausgesendet wird und die Entfernungsauflösung $\delta$R, der Rekurrenzperiode der Impulse und die Dauer der Aussendung der Impulsgruppe so gewählt sind, daß sich ein Wechsel des Entfernungsfachs aufgrund der Bewegung eines bewegten Ziels ergibt, das zwischen der ersten und der letzten Rekurrenz der Impulsgruppe nicht im gleichen Entfernungsfach bleibt, wenn die Entfernung größer als ein Entfernungsfach der Tiefe $\delta$R für ein Ziel ist, dessen Geschwindigkeit der mehrdeutigen Geschwindigkeit des Radarsystems gleicht, **dadurch gekennzeichnet, daß** das Verfahren die folgenden Schritte aufweist:

- für jedes Entfernungsfach sucht man die Tastproben des empfangenen Signals entsprechend den N Rekurrenzen der Impulsgruppe für jede Hypothese ($_0$ bis $V_{N-1}$) einer realen Geschwindigkeit eines Ziels, wobei dieser Schritt für jedes Entfernungsfach und jeder Geschwindigkeitshypothese in jeder Rekurrenz die Tastprobe bestimmt, die der Kompensation der Entfernungsfachänderung aufgrund der Geschwindigkeit entspricht;
- die Doppler-Analyse der in den N Rekurrenzen für jedes Entfernungsfach und jede Geschwindigkeitshypothese empfangenen Echos wird durchgeführt;
- die Informationen jedes entdeckten Ziels werden entnommen aufgrund des Rangs des Entfernungsfachs, das die Entfernung des Ziels angibt, und des Ergebnisses der Doppler-Analyse sowie der entsprechenden Geschwindigkeitshypothese, wodurch sich die eindeutige Geschwindigkeit des Ziels ergibt.

2. Verfahren nach Anspruch 1, **dadurch gekennzeichnet, daß** im Schritt der Suche der Tastproben des empfangenen Signals die Geschwindigkeitshypothesen aufeinanderfolgenden groben Geschwindigkeitswerten des Ziels entsprechen, die sich voneinander durch einen inkrementalen Wert $\Delta V$ unterscheiden, derart, daß dieser Wert $\Delta V$ nicht zu einem Wechsel von mehr als einem Entfernungsfach zwischen der ersten und der letzten Rekurrenz des Impulszugs führt.

3. Verfahren nach einem beliebigen der vorstehenden Ansprüche, **dadurch gekennzeichnet, daß** für jede Rekurrenz r die für ein Entfernungsfach t und eine Geschwindigkeit V ausgewählte Tastprobe die Tastprobe mit dem Rang ist, der dem ganzzahligen Teil von $t - r \cdot V \cdot Tr/\delta R$ gleicht, wobei Tr die Rekurrenzperiode ist.

4. Verfahren nach Anspruch 3, **dadurch gekennzeichnet, daß** der Inkrementwert $\Delta V$ so gewählt wird, daß gilt:

$$\Delta V \le \delta R/(N \cdot Tr)$$

wobei $\delta R = c/2B$ gilt sowie c die Lichtgeschwindigkeit und B das Frequenzband des Radarsystems ist.

5. Verfahren nach einem beliebigen der vorstehenden Ansprüche, **dadurch gekennzeichnet, daß** der Schritt der Doppler-Analyse der empfangenen Echos darin besteht, für jedes Entfernungsfach und die Geschwindigkeitshypothese ausgewählten Tastproben, nachdem sie in Phase gebracht wurden, zu summieren und die erhaltenen Summen mit einer Schwelle zu vergleichen, die das Vorliegen oder Nichtvorliegen eines Ziels bestimmt.

6. Verfahren nach Anspruch 5, **dadurch gekennzeichnet, daß** die Doppler-Analyse die Berechnung der Fourier-Transformierten der ausgewählten Tastproben gemäß der folgenden Beziehung enthält:

$$T_{t\delta R, V} = \sum_{r=0}^{N-1} x_{r,\Gamma\left[t - r\frac{VTr}{\delta R}\right]} \cdot e^{-j2\pi\frac{Fo}{Fr}\frac{2V}{c}}$$

wobei $T_{t\delta R,V}$ den Pegel des bei der Doppler-Analyse erhaltenen Signals für die Entfernung $t \cdot \delta R$ und V die grobe Geschwindigkeit bezeichnet, während $\Gamma[t - r \cdot V \cdot Tr/\delta R]$ der nächstliegende ganzzahlige Wert von $t - r \cdot V \cdot Tr/\delta R$ ist und Fo die Sendefrequenz ist.

7. Vorrichtung zur Erfassung von Zielen für ein breitbandiges und hinsichtlich der Entfernung nicht mehrdeutiges Impuls-Dopplerradarsystem mit niedriger Wiederholfrequenz und hoher Entfernungsauflösung, das einen Sender (1 bis 4) zur Aussendung einer Gruppe von N kohärenten Impulsen, wobei die Entfernungsauflösung $\delta R$, die Wiederholperiode der Impulse und die Dauer der Aussendung der Impulsgruppe so gewählt sind, daß sich ein Wechsel des Entfernungsfachs aufgrund der Bewegung eines bewegten Ziels ergibt, das zwischen der ersten und der letzten Rekurrenz der Impulsgruppe nicht im gleichen Entfernungsfach bleibt, wenn die Entfernung größer als ein Entfernungsfach der Tiefe $\delta R$ für ein Ziel ist, dessen Geschwindigkeit der mehrdeutigen Geschwindigkeit des Radarsystems gleicht, sowie Empfangsmittel (1, 2, 5, 6, 7) aufweist, die Tastproben des während jeder Rekurrenz der Impulsgruppe empfangenen Signals liefern, zur Durchführung des Verfahrens nach einem der Ansprüche 1 bis 6, **dadurch gekennzeichnet, daß** sie enthält:

- Mittel (10.0, 10.t,...), die für jedes Entfernungsfach Tastproben des empfangenen Signals entsprechend den N Rekurrenzen der Impulsgruppe für jede reale Geschwindigkeitshypothese ($V_O$ bis $V_{N-1}$) eines Ziels suchen, wobei die Suche für jedes Entfernungsfach und jede Geschwindigkeitshypothese in jeder Rekurrenz die Tastprobe bestimmt, die der Kompensation des Wechsels des Entfernungsfachs aufgrund der Geschwindigkeit entspricht,
- Rechenmittel (11.00 bis 11.0(N-1); 11.t0 bis 11.t(N-1)...) für die Berechnung der Fourier-Transformierten unter den von den Suchmitteln ausgewählten Tastproben,
- Mittel (12.00 bis 12.0(N-1); 12.t0 bis 12.t(N-1)...) zum Vergleich der Ergebnisse der Fourier-Transformierten mit einer vorbestimmten Schwelle, um das Vorliegen eines Ziels zu erfassen,
- und Extraktionsmittel (13.0, 13.t, ...), um eindeutige reale Entfernungs- und Geschwindigkeitsinformationen für jedes erfaßte Ziel zu liefern.

FIG.1

FIG.2

FIG.3

FIG.4

FIG.5